# EUROPÄISCHE PATENTSCHRIFT

(11) **EP 0 932 766 B1**
(45) Veröffentlichungstag und Bekanntmachung des Hinweises auf die Patenterteilung: **21.05.2003**
(21) Anmeldenummer: 98936214.0
(22) Anmeldetag: 18.06.1998
(51) Int. Cl.: F04B 53/16, F04B 1/04

(54) **KOLBENPUMPE**
PISTON PUMP
POMPE A PISTON

(30) Priorität: 30.07.1997 DE 19732791
(43) Veröffentlichungstag der Anmeldung: 04.08.1999
(73) Patentinhaber: ROBERT BOSCH GMBH, 70442 Stuttgart (DE)
(72) Erfinder: HAUSER, Manfred, D-71701 Schwieberdingen (DE); ALAZE, Norbert, D-71706 Markgröningen (DE); MERKLEIN, Dieter, D-87435 Kempten (DE); SCHULLER, Wolfgang, D-74343 Sachsenheim (DE); BAYRHOF, Julius, D-88161 Lindenberg (DE); FRITSCH, Siegfried, D-87527 Sonthofen (DE); KREMSREITER, Walter, D-87541 Hindelang (DE); MAYER, Franz, D-87490 Haldenwang (DE); EVERTZ, Joachim, D-87527 Sonthofen (DE); ZIELKE, Jörg, D-87509 Immenstadt (DE); ZITZELSBERGER, Ralf, D-87616 Marktoberdorf (DE); WEH, Andreas, D-87471 Durach (DE); ALLENZON, Bernd, D-87487 Wiggensbach (DE); HELLEBRANDT, Michael, D-87545 Burgberg (DE); FLUCK, Tobias, D-87501 Immenstadt (DE)
(86) Internationale Anmeldenummer: DE9801671
(87) Internationale Veröffentlichungsnummer: WO99006707

(56) Entgegenhaltungen:
- WO-A-97/13667
- DE-A- 4 027 794
- DE-A- 19 730 750
- DE-C- 909 178
- PATENT ABSTRACTS OF JAPAN vol. 096, no. 011, 29. November 1996 & JP 08 177752 A (NISSIN KOGYO KK), 12. Juli 1996

## Beschreibung

### Stand der Technik

Die Erfindung betrifft eine Kolbenpumpe nach der Gattung des Hauptanspruchs, die insbesondere für eine Fahrzeugbremsanlage vorgesehen ist.

Derartige Kolbenpumpen sind an sich bekannt. Sie weisen einen Kolben auf, der in einer Laufbuchse zu einer hin- und hergehenden Hubbewegung antreibbar axial verschieblich in einer Laufbuchse aufgenommen ist. Die Laufbuchse ist in eine Zylinderbohrung eines Pumpegehäuses eingesetzt, welches einen Hydraulikblock der Fahrzeugbremsanlage bilden kann. Auf einer dem Kolbenantrieb abgewandten Seite ist die Zylinderbohrung mit einem in sie eingesetzten Verschlußteil nach außen hin druckdicht verschlossen.

Bei bekannten Kolbenpumpen ist ein Rückschlagventil als Auslaßventil in das Verschlußteil eingesetzt, das mit einem Ventilsitz an einem Boden der Laufbuchse zusammenwirkt. Eine Ausströmung aus der Kolbenpumpe erfolgt durch radiale Auslaßbohrungen im Verschlußteil oder auch in der Laufbuchse, die mit einem Auslaß im Pumpengehäuse kommunizieren. Derartige Auslaßbohrungen im Verschlußteil oder in der Laufbuchse haben den Nachteil, daß sie spanend in einem eigenen Arbeitsgang hergestellt werden müssen. Hinzu kommt, daß ein radiales Anbringen einer Bohrung in einem zylindrischen Teil Schwierigkeiten bereitet. Die Anbringung der Auslaßbohrungen ist daher aufwendig, zeit- und kostenintensiv.

Kolbenpumpen entsprechend den Merkmalen im Oberbegriff des Anspruchs 1 sind darüber hinaus aus den Druckschriften DE 909 178 C, der JP 08 177752 A, der DE 40 27 794 A1 und der WO 97/13667 A vorbekannt. Bei diesen bekannten Kolbenpumpen sind die Durchströmkanäle zwischen den Laufbuchsen und den Verschlußteilen angeordnet. Im Unterschied zum Gegenstand der vorliegenden Erfindung sind die Durchströmkanäle aber nicht in Teilabschnitte gegliedert, die zudem an verschiedenen Bauteilen der Kolbenpumpe ausgebildet sind. Dies wirkt sich nachteilig in Bezug auf die preisgünstige Herstellung und die Geräuschbildung während des Betriebs der Kolbenpumpen aus.

### Vorteile der Erfindung

Die erfindungsgemäße Kolbenpumpe mit den Merkmalen des Hauptanspruchs weist einen Durchströmkanal als Ein- oder Auslaß auf, der von einer Nut in einem Boden der Laufbuchse und/oder von einer Nut im Verschlußteil gebildet wird, die vom Verschlußteil bzw. von der Laufbuchse oder deren Boden zu einem Kanal abgedeckt wird. Der Durchströmkanal kann auch von einer Nut in der Laufbuchse und einer Nut im Verschlußteil gemeinsam gebildet werden. Der Durchströmkanal befindet sich also zwischen dem Verschlußteil und der Laufbuchse. Die Erfindung hat den Vorteil, daß sich die Laufbuchse und das Verschlußteil einschließlich des den Pumpeneinlaß oder Pumpenauslaß bildenden Durchströmkanals in einem spanlosen Arbeitsgang schnell und preisgünstig als Umformteile, insbesondere als Kaltumformteile beispielsweise durch Kaltschlagen herstellen lassen.

Die Unteransprüche haben vorteilhafte Ausgestaltungen und Weiterbildungen der im Hauptanspruch angegebenen Erfindung zum Gegenstand

Des weiteren wirkt ein mit geringem Abstand in axialer Richtung der Kolbenpumpe am Ventilsitz angeordneter Durchströmkanal, wie sie die Anbringung als Nut in der Laufbuchse oder im Verschlußteil ermöglicht, einer Geräuschbildung beim Durchströmen des Rückschlagventils entgegen.

Zur Verringerung der Geräuschbildung beim Durchströmen des Rückschlagventils ist es günstig, wenn der Durchströmkanal von einer im folgenden als Äquator bezeichneten Mittelebene einer Ventilkugel des Rückschlagventils, die zugleich eine Radialebene der Kolbenpumpe bildet, in Richtung des Ventilsitzes versetzt in eine die Ventilkugel aufnehmende Ventilkammer mündet. Der Versatz der Mündung des Durchströmkanals vom Äquator der Ventilkugel zum Ventilsitz sollte ca. 20-30% eines Radius der Ventilkugel oder mehr betragen. Anders ausgedrückt sollte der Durchströmkanal in axialer Richtung gesehen dicht am Ventilsitz aus der Ventilkammer abgehen. Eine Erklärung für die Minderung der Geräuschbildung wird darin gesehen, daß bei Durchströmung des Rückschlagventils die Ventilkugel nicht vollständig umströmt wird, wobei sich eine komplexe Umströmung ausbildet, die die Ventilkugel zu unkontrollierten oszillierenden Bewegungen anregt, sondern daß die Strömung nach Passieren des Ventilsitzes unmittelbar zur Seite in Richtung des Durchströmkanals umgelenkt wird. Dadurch wird nur ein kleiner Bruchteil der Oberfläche der Ventilkugel einer Strömung ausgesetzt, zum größten Teil ist die Ventilkugel von ruhendem Fluid umgeben. Das Erfordernis, den Durchströmkanal dicht am Ventilsitz münden zu lassen läßt sich durch seine Ausbildung als Nut besonders gut verwirklichen, insbesondere wenn die Nut in einem Boden der Laufbuchse angebracht ist.

Durch die Bildung des Durchströmkanals mittels einer Nut läßt sich der Durchströmkanal problemlos flach und breit ausbilden, und dadurch ebenfalls in axialer Richtung dicht an den Ventilsitz annähern. Dies findet allerdings eine Grenze, wenn bei gegebenem Durchströmquerschnitt der Durchströmwiderstand zu groß wird. Als günstig wird eine Breite des Durchströmkanals von ca. 60 bis 65% des Durchmessers der Ventilkugel bei einer Höhe des Durchströmkanals von ca. 20-30% seiner Breite angesehen. Des weiteren hat die Anordnung der Mündung des Durchströmkanals dicht beim Ventilsitz den Vorteil, daß die Ventilkugel bei durchströmtem Rückschlagventil den Durchströmkanal nicht verschließen kann, da sie mit ihrem Äquator auf einer dem Ventilsitz abgewandten Seite des Durchströmkanals an einer Wand der Ventilkammer anliegt.

Des weiteren dient es der Minderung der Geräuschbildung, wenn nur gemäß Anspruch 3 ein Durchströmkanal von der Ventilkammer abgeht, da eine Ventildurchströmung ausschließlich in einer Richtung nämlich zum einzigen Durchströmkanal umgelenkt wird, wodurch die Ventilkugel in Richtung des Durchströmkanals ausgelenkt und auf der Seite des Durchströmkanals an die Wand der Ventilkammer angelegt wird. Dadurch wird eine Oszillation der Ventilkugel vermieden. Die genannten Maßnahmen zur Vermeidung der Geräuschbildung lassen sich auch bei Ventilschließkörpern anwenden, die von der Kugelform abweichen.

Um die Umformkräfte beim Herstellen der den Durchströmkanal bildenden Nuten gering zu halten, ist bei einer Ausgestaltung der Erfindung vorgesehen, einen von der Ventilkammer abgehenden Abschnitt des Durchströmkanals im Laufbuchsenboden anzubringen und einen übrigen, nach außen führenden Teil des Durchströmkanals im Verschlußteil anzubringen (Anspruch 3). Da die Laufbuchse vorzugsweise aus Stahl und das Verschlußteil vorzugsweise aus einer Aluminiumlegierung besteht, werden die Umformkräfte verringert und es läßt sich trotzdem erreichen, daß die ventilseitige Mündung des Durchströmkanals dicht am Ventilsitz ist.

Eine Ringnut gemäß Anspruch 4 vorzugsweise im Verschlußteil stellt sicher, daß die Nut im Laufbuchsenboden mit der Nut im Verschlußteil unabhängig von einer Winkelstellung des Verschlußteils zur Laufbuchse kommuniziert. Dies erübrigt Maßnahmen, die ein verdrehsicheres Anbringen des Verschlußteils im Bezug auf die Laufbuchse sicher stellen.

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenen Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
- Figur 1: eine erfindungsgemäße Kolbenpumpe im Achsschnitt,
- Figur 2: eine Ansicht auf eine dem Verschlußteil zugewandte Stirnseite eines Laufbuchsenbodens der Kolbenpumpe aus Figur 1,
- Figur 3: einen Schnitt entlang Linie III-III in Figur 2,
- Figur 4: einen Schnitt entlang Linie IV-IV in Figur 2, und
- Figur 5: eine Ansicht auf eine der Laufbuchse zugewandte Stirnseite eines Verschlußteils der Kolbenpumpe aus Figur 1.

### Beschreibung des Ausführungsbeispiels

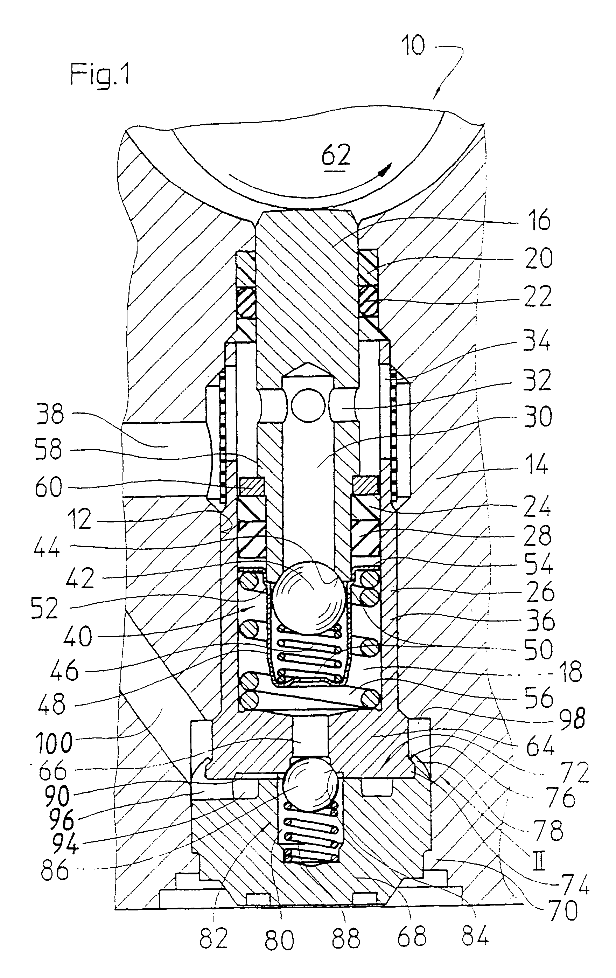

Die erfindungsgemäße, insgesamt mit 10 bezeichnete, in Figur 1 dargestellte, bevorzugt ausgewählte Kolbenpumpe ist in eine gestufte Zylinderbohrung 12 eingesetzt, welche in einem Hydraulikblock angebracht ist, der ein Pumpengehäuse 14 bildet. Der Hydraulikblock, von dem in der Zeichnung nur ein die Kolbenpumpe 10 umgebendes Bruchstück dargestellt ist, ist Bestandteil einer schlupfgeregelten, im übrigen nicht dargestellten, hydraulischen Fahrzeugbremsanlage. In ihn sind außer der Kolbenpumpe 10 weitere hydraulische Bauteile wie Magnetventile oder Druckspeicher eingesetzt und hydraulisch miteinander und mit der erfindungsgemäßen Kolbenpumpe 10 verschaltet.

Die Kolbenpumpe 10 weist einen Kolben 16 auf, dessen eines, einem Verdrängungsraum 18 abgewandtes Ende mit einem Führungsring 20 im Pumpengehäuse 14 geführt und mit einem Dichtring 22 abgedichtet ist. Ein anderes dem Verdrängungsraum 18 zugewandtes Ende des Kolbens 16 ist mit einem Führungsring 24 in einer Laufbuchse 26 der Kolbenpumpe 10 geführt und mit einem Dichtring 28 abgedichtet. Die Laufbuchse 26 ist mit einer Preßpassung in die Zylinderbohrung 12 des Pumpengehäuses 14 eingesetzt. Die Preßpassung bewirkt eine Abdichtung zwischen Ein- und Auslaßseite, d. h. zwischen Niederund Hochdruckseite der Kolbenpumpe10.

Für den Pumpeneiniaß ist im Kolben 16 eine axiale Sackbohrung 30 von einer dem Verdrängungsraum 18 zugewandten Seite her angebracht, die nahe ihres Grundes von Querbohrungen 32 gekreuzt wird. Sack- und Querbohrungen 30, 32 kommunizieren durch Fenster 34 in einer Umfangswand 36 der Laufbuchse 24 mit einer Zuströmbohrung 38, die radial zur Kolbenpumpe 10 in dem das Pumpengehäuse 14 bildenden Hydraulikblock angebracht ist.

Am verdrängungsraumseitigen Ende des Kolbens 16 ist ein Rückschlagventil als Einlaßventil 40 angebracht: Das Einlaßventil 40 weist eine Ventilkugel 42 als Ventilschließkörper auf, die mit einem konischen Ventilsitz 44 zusammenwirkt, der an einer Mündung der Sackbohrung 30 des Kolbens 16 angebracht ist. Eine Schraubendruckfeder als Ventilschließfeder 46 drückt die Ventilkugel 42 gegen den Ventilsitz 44. Ventilkugel 42 und Ventilschließfeder 46 sind in einem Ventilkäfig 48 aufgenommen, welcher als napfförmiges Tiefziehteil aus Blech mit einem etwa dem Durchmesser des Kolbens 16 entsprechenden Durchmesser hergestellt und mit Durchströmöffnungen 50 versehen ist. Der Ventilkäfig 48 weist eine Ringstufe 52 auf, mit der er an einer dem Verdrängungsraum 18 zugewandten Stirnseite des Kolbens 16 anliegt. Er weist einen mit ihm einstückigen, nach außen stehenden Radialflansch 54 auf, gegen den eine Schraubendruckfeder als Kolbenrückstellfeder 56 drückt und auf diese Weise den Ventilkäfig 48 am Kolben 16 hält. Der Radialflansch 54 hält zugleich den Führungsring 24 und den Dichtring 28 zwischen sich und einem sich an einer Ringschulter 58 des Kolbens 16 abstützenden Stützring 60 in axialer Richtung auf dem Kolben 16.

Die Kolbenrückstellfeder 56 drückt über den Radialflansch 54 des Ventilkäfigs 48 den Kolben 16 in axialer Richtung gegen einen elektromotorisch rotierend antreibbaren Exzenter 62, der zum Antrieb des Kolbens 16 zu einer hin- und hergehenden Hubbewegung in an sich bekannter Weise dient.

Auf an den Verdrängungsraum 18 angrenzenden Seite weist die Laufbuchse 26 einen mit ihr einstückigen Laufbuchsenboden 64 auf, in dem ein durchgehendes Mittelloch 66 für den Pumpenauslaß angebracht ist.

Auf der Verdrängungsraumseite, unmittelbar stirnseitig an den Laufbuchsenboden 64 angrenzend, ist ein Verschlußteil 68, das die Form eines zylindrischen Stopfens aufweist, in die Zylinderbohrung 12, eingesetzt und durch eine Verstemmung 70 des Pumpengehäuses 14 in der Zylinderbohrung 12 befestigt und fluiddicht abgedichtet. Das Verschlußelement 68 hält zugleich die Laufbuchse 26 in der Zylinderbohrung 12.

Auf einer der Laufbuchse 26 zugewandten Stirnseite ist eine flache, vorzugsweise zylindrische Ausnehmung 72 im Verschlußteil 68 angebracht, in die die Laufbuchse 26 mit ihrem den Laufbuchsenboden 64 aufweisenden Ende eingesetzt ist. Zur Befestigung des Verschlußteils 68 an der Laufbuchse 26 weist die Laufbuchse 26 an ihrem in das Verschlußteil 68 eingesetzten Ende einen nach außen überstehenden Radialbund 74 auf, der eine Hinterschneidung 76 bildet, die von einem Rand 78 der Ausnehmung 72 des Verschlußteils 68 hintergriffen wird. Um den Rand 78 in Hintergriff mit der Hinterschneidung 76 zu bringen, ist er radial nach innen beispielsweise durch Bördeln, umgeformt. Zur Befestigung reicht ein Bördeln an drei bis vier Stellen des Umfangs aus.

An einem Grund der Ausnehmung 72 ist ein axiales Sackloch 80 im Verschlußteil 68 angebracht, in welchem ein Rückschlagventil als Auslaßventil 82 untergebracht ist, das mit einem balligen Ventilsitz 84 zusammenwirkt, welcher an einer dem Verschlußteil 68 zugewandten Mündung des Mittellochs 66 im Laufbuchsenboden 64 angebracht ist. im Sackloch 80 des Verschlußteils 68 ist eine Ventilkugel 86 als Ventilschließkörper eingesetzt, welche von einer Schraubendruckfeder 88 als Ventilschließfeder gegen den Ventilsitz 84 gedrückt wird.

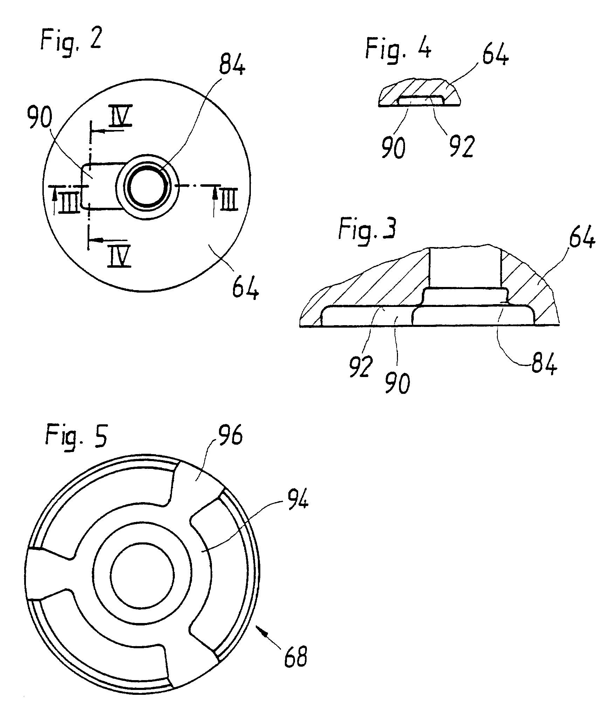

Als Auslaß weist die in Figur 1 dargestellte Kolbenpumpe 10 in einander zugewandten Stirnseiten des Laufbuchsenbodens 64 und des Verschlußteils 68 angebrachte Nuten auf, die vom jeweils anderen Teil, also vom Verschlußteil 68 bzw. vom Laufbuchsenboden 64 zu Auslaßkanälen abgedeckt sind: Die Ausiaßkanäle gehören zu einem zwischen dem Verschlußteil 68 und dem Laufbuchsenboden 64 der Laufbuchse 26 sich erstreckenden Durchströmkanal, der sich beim bevorzugt ausgewählten Ausführungsbeispiel aus mehreren Kanalabschnitten zusammensetzt. Im Laufbuchsenboden 64 ist eine kurze, radial verlaufende Nut 90 angebracht, die vom Ventilsitz 84 des Auslaßventils 82 bis ungefähr in die Mitte zwischen dem Ventilsitz 84 und einem Außenrand des Laufbuchsenbodens 64 verläuft (Figuren 2 bis 4). Ein Nutgrund 92 geht in den Ventilsitz 84 über, d. h. die den Auslaßkanal bildende Nut 90 hat nur geringen Abstand in axialer Richtung vom Ventilsitz 84. Eine derart dichte Anordnung des Auslaßkanals am Ventilsitz 84 verringert eine Geräuschbildung beim Durchströmen des Auslaßventils 82. Es ist nur eine einzige Nut 90 im Laufbuchsenboden 64 vorgesehen, wodurch bei durchströmtem, geöffnetem Auslaßventil 82 ein Schlagen der umströmten Ventilkugel 86 gegen eine Umfangswand des Sacklochs 80 vermieden wird. Die von der Ausströmung vom Ventilsitz 84 abgehobene Ventilkugel 86 legt sich auf der Seite der Nut 90 an die Umfangswand des Sacklochs 80 an. Dadurch wird ebenfalls einer Geräuschbildung entgegengewirkt.

Die den Auslaßkanal bildende Nut 90 im Laufbuchsenboden 64 ist flach und breit. Im dargestellten Ausführungsbeispiel hat sie eine Breite von 2,2 mm bei einer Höhe von 0,5 mm, d. h. einem Abströmquerschnitt von 1,1 mm². Zum Vergleich:
Die Ventilkugel 86 hat einen Durchmesser von 3,5 mm. Das heißt die Nut 90 hat ein Tiefen- zu Breite-Verhältnis von etwa 0,23, wobei die Breite der Nut 90 etwa das 0,63fache des Durchmessers der Ventilkugel 86 beträgt.

Der Ventilsitz 84 ist versenkt im Laufbuchsenboden 64 angebracht. Dies verhindert eine mechanische Beschädigung des Ventilsitzes 84 vor dem Verbinden der Laufbuchse 26 mit dem Verschlußteil 68 und vermindert somit unerwünschten Ausschuß der als Schüttgut transportierten Laufbuchse 26 bzw. der gesamten Kolbenpumpe 10.

Im Bereich eines radial äußeren Endes der Nut 90 im Laufbuchsenboden 64 ist in der dem Laufbuchsenboden 64 zugewandten Stirnseite des Verschiußteils 68 eine konzentrische Ringnut 94 angebracht, von der sternförmig drei Radialnuten 96 zum Umfang des Verschlußteils 68 verlaufen (Figur 5). Durch die Ringnut 94 und die Radialnuten 96 kommuniziert die Nut 90 im Laufbuchsenboden 64 mit einem Ringkanal 98, in den eine Auslaßbohrung 100 des Pumpengehäuses 14 mündet. Die Ringnut 94 im Verschlußteil 68 stellt sicher, daß die Nut 90 im Laufbuchsenboden 64 unabhängig von einer Winkelstellung, in der das Verschlußteil 68 an der Laufbuchse 26 angebracht ist, kommuniziert. Dies gestattet eine winkelunabhängige Befestigung des Verschlußteils 68 an der Laufbuchse 26.

Ein- und Auslaßventil 40, 82 können auch mit umgekehrter Durchströmrichtung ausgebildet sein (nicht dargestellt), so daß sich die Durchströmrichtung der Kolbenpumpe 10 umkehrt. In diesem Fall bilden die Radialnuten 96 und Ringnut 94 im Verschlußteil 68 und die Nut 90 im Laufbuchsenboden 64 einen Pumpeneinlaß. Mit anderen Worten, der die Radialnut 96, die Ringnut 94 und die Nut 90 umfassende Durchströmkanal gehört zu einem Einlaßkanal, durch den die zu pumpende Flüssigkeit aus der Auslaßbohrung, die in diesem Fall ein Zulaufkanal ist, in Richtung des Verdrängungsraum 18 strömen kann. Es können auch bei Ausgestaltungen der Erfindung anstelle des Einlaßventils 40 und/oder des Auslaßventils 82 ein Ein- oder Auslaßventil in die Zuströmbohrung 38 oder die Auslaßbohrung 100 eingesetzt sein (nicht dargstellt).

Die Laufbuchse 26 ist als Kaltschlagteil aus Stahl hergestellt, wobei in einem Arbeitsgang mit der Herstellung der Laufbuchse 26 auch das Mittelloch 66, der Ventilsitz 84 und die Nut 90 im Laufbuchsenboden 64 hergestellt sind. Es ist allenfalls eine Nachbearbeitung des Ventilsitzes 84 notwendig. Auf diese Weise läßt sich die Laufbuchse 26 preiswert und schnell spanlos herstellen.

Das Verschlußteil 68 ist als Kaltschlagteil aus Aluminium hergestellt, wobei Ringnut 94 und Radialnut 96 in einem Arbeitsgang mit dem Verschlußteil 68 durch Kaltschlagen hergestellt sind. Auch dies bringt einen erheblichen Kostenvorteil und Zeitersparnis bei der Herstellung mit sich.

Im dargestellten Ausführungsbeispiel hat eine dem Verschlußteil 68 zugewandte Seite einer der Ventilkugel 86 zugewandten Mündung der den Auslaßkanal bildenden Nut 90 im Laufbuchsenboden 64, also ein Grund der Ausnehmung 72 des Verschlußteils 68, einen Abstand von mindestens 0,3 mm von einer Mittelebene der Ventilkugel 86 radial zu einer Pumpenachse, d. h. der Auslaßkanal ist um etwa 30% oder mehr eines Radius der Ventilkugel 86 von deren radialer Mittelebene in Richtung des Ventilsitzes 84 in axialer Richtung versetzt angeordnet.

Durch ihre Anordnung kann die den Auslaßkanal bildende Nut 90 im Laufbuchsenboden 64 nicht von der Ventilkugel 86 verschlossen werden.

## Patentansprüche

1. Kolbenpumpe (10) mit einem zu einer in axialer Richtung hin- und hergehenden Hubbewegung antreibbaren Kolben (16), der in einer Laufbuchse (26) axial verschieblich aufgenommen ist, die in ein Pumpengehäuse (14) eingesetzt ist und mit einem Verschlußteil (68), welches das Pumpengehäuse (14) abdichtend auf einer Stirnseite der Laufbuchse (26) in das Pumpengehäuse (14) eingesetzt ist, wobei die Kolbenpumpe (10) einen Durchströmkanal (90, 94, 96) zwischen dem Verschlußteil (68) und der Laufbuchse (26) aufweist, der von einer Nut (90/94/96) im Verschlußteil (68) und/oder in der Laufbuchse (26) gebildet ist, wobei die Laufbuchse (26) einen Laufbuchsenboden (64) an einem dem Verschlußteil (68) zugewandten Stirnende aufweist, **dadurch gekennzeichnet, dass** ein radial innerer Teil (90) des Durchströmkanals (90, 94 ,96) von einer Nut (90) im Laufbuchsenboden (64) gebildet ist, der mit einem radial äußeren Teil (96) des Durchströmkanals (90, 94, 96) kommuniziert, welcher von einer Nut (96) im Verschlußteil (68) gebildet ist.

2. Kolbenpumpe nach Anspruch 1, **dadurch gekennzeichnet, dass** das Verschlußteil (68) in einer dem Laufbuchsenboden (64) zugewandten Stirnfläche und/oder der Laufbuchsenboden (64) in einer dem Verschlußteil (68) zugewandten Stirnfläche eine Ringnut (94) aufweist, die einen Bestandteil des Durchströmkanals (90, 94, 96) bildet und durch die der radial innere Teil (90) mit dem radial äußeren Teil (96) des Durchströmkanals (90, 94, 96) kommuniziert.

3. Kolbenpumpe nach Anspruch 1, **dadurch gekennzeichnet, dass** die Kolbenpumpe (10) ein Rückschlagventil (82) an einem dem Verschlußteil (68) zugewandten Stirnende der Laufbuchse (26) aufweist und dass der Durchströmkanal (90) auf der Seite des Rückschlagventils (82) ausschließlich eine Mündung aufweist, die sich in geringem Abstand in axialer Richtung vom Ventilsitz (84) des Rückschlagventils (82) befindet.

4. Kolbenpumpe nach Anspruch 3, **dadurch gekennzeichnet, dass** die dem Rückschlagventil (82) zugewandte Mündung des Durchströmkanals (90) einen Abstand in axialer Richtung von einer Mittelebene einer Ventilkugel (86) des Rückschlagventils (82) aufweist, der mindestens 30% eines Radius der Ventilkugel (86) entspricht.

5. Kolbenpumpe nach Anspruch 3, **dadurch gekennzeichnet, dass** die dem Rückschlagventil (82) zugewandte Mündung des Durchströmkanals (90) ein Höhen- zu Breitenverhältnis von 0,2 bis 0,3 aufweist.

6. Kolbenpumpe nach Anspruch 3, **dadurch gekennzeichnet, dass** eine dem Rückschlagventil (82) zugewandte Mündung des Durchströmkanals (90) eine Breite aufweist, die höchstens das 0,65-fache eines Durchmessers einer Ventilkugel (86) des Rückschlagventils (82) beträgt.

7. Kolbenpumpe nach Anspruch 1, **dadurch gekennzeichnet, dass** die Laufbuchse (26) ein Umformteil, insbesondere ein Kaltumformteil, insbesondere ein Kaltschlagteil ist.

8. Kolbenpumpe nach Anspruch 1, **dadurch gekennzeichnet, dass** das Verschlußteil (68) ein Umformteil, insbesondere ein Kaltumformteil, insbesondere ein Kaltschlagteil ist.

## Claims

1. Piston pump (10) having a piston (16) which can be driven so as to perform a reciprocating stroke movement in the axial direction and is accommodated in an axially displaceable manner in a bushing (26) which is inserted into a pump housing (14), and having a closure part (68) which is inserted into the pump housing (14) on an end face of the bushing (26) in such a way as to seal off the pump housing (14), the piston pump (10) having a throughflow passage (90, 94, 96) between the closure part (68) and the bushing (26), this throughflow passage (90, 94, 96) being formed by a groove (90, 94, 96) in the closure part (68) and/or in the bushing (26), the bushing (26) having a bushing base (64) at a front end facing the closure part (68), **characterized in that** a radially inner part (90) of the throughflow passage (90, 94, 96) is formed by a groove (90) in the bushing base (64), and this radially inner part (90) communicates with a radially outer part (96) of the throughflow passage (90, 94, 96), the radially outer part (96) being formed by a groove (96) in the closure part (68).

2. Piston pump according to Claim 1, **characterized in that** the closure part (68), in an end face facing the bushing base (64), and/or the bushing base (64), in an end face facing the closure part (68), has an annular groove (94) which forms an integral part of the throughflow passage (90, 94, 96) and by means of which the radially inner part (90) communicates with the radially outer part (96) of the throughflow passage (90, 94, 96).

3. Piston pump according to Claim 1, **characterized in that** the piston pump (10) has a non-return valve (82) at a front end of the bushing (26) which faces the closure part (68), and **in that** the throughflow passage (90) has an orifice solely on the side of the non-return valve (82), this orifice being located at a slight distance from the valve seat (84) of the non-return valve (82) in the axial direction.

4. Piston pump according to Claim 3, **characterized in that** the orifice, facing the non-return valve (82), of the throughflow passage (90) is at a distance from a centre plane of a valve ball (86) of the non-return valve (82) in the axial direction, this distance corresponding to at least 30% of a radius of the valve ball (86).

5. Piston pump according to Claim 3, **characterized in that** the orifice, facing the non-return valve (82), of the throughflow passage (90) has a height-to-width ratio of 0.2 to 0.3.

6. Piston pump according to Claim 3, **characterized in that** an orifice, facing the non-return valve (82), of the throughflow passage (90) has a width which is at most 0.65 times a diameter of a valve ball (86) of the non-return valve (82).

7. Piston pump according to Claim 1, **characterized in that** the bushing (26) is a formed part, in particular a cold-formed part, in particular a cold-forged part.

8. Piston pump according to Claim 1, **characterized in that** the closure part (68) is a formed part, in particular a cold-formed part, in particular a cold-forged part.

## Revendications

1. Pompe à piston (10) comportant un piston (16) entraîné selon un mouvement de translation en va et vient dans la direction axiale, ce piston étant logé de façon coulissante axialement dans une chemise (26) elle-même placée dans un corps de pompe (14), fermée par une pièce d'obturation (68) placée dans le corps de pompe (14) de manière à étancher du côté de la face frontale de la chemise (26) le corps de pompe (14),
la pompe à piston (10) ayant un canal de passage (90, 94, 96) entre la pièce d'obturation (68) et la chemise (26), ce canal étant formé par une rainure (90, 94, 96) dans la pièce d'obturation (68) et/ou dans la chemise (26), et
la chemise (26) ayant un fond (64) à son extrémité tournée vers la pièce d'obturation (68),
**caractérisée en ce qu'**
une partie radiale (90) du canal de passage (90, 94, 96) est formée par une rainure (90) réalisée dans le fond (64) de la chemise, cette rainure communiquant avec une partie radiale extérieure (96) du canal de passage (90, 94, 96) formée par une rainure (96) dans la pièce d'obturation (68).

2. Pompe à piston selon la revendication 1,
**caractérisée en ce que**
la pièce d'obturation (68) comporte dans une surface frontale tournée vers le fond (64) de la chemise et/ou le fond de la chemise (64) dans une surface frontale tournée vers la pièce d'obturation (68), une rainure annulaire (94) faisant partie du canal de passage (90, 94, 96) et par laquelle la partie radiale intérieure (90) communique avec la partie radiale extérieure (96) du canal de passage (90, 94, 96).

3. Pompe à piston selon la revendication 1,
**caractérisée en ce que**
la pompe à piston (10) comporte un clapet anti-retour (82) au niveau de la face frontale de la chemise (26) tournée vers la pièce d'obturation (68) et
le canal de passage (90) comporte, du côté du clapet anti-retour (82), uniquement une embouchure qui se trouve à faible distance dans la direction axiale du siège (84) du clapet anti-retour (82).

4. Pompe à piston selon la revendication 3,
**caractérisée en ce que**
l'embouchure du canal de passage (90) tournée vers le clapet anti-retour (82) est écartée dans la direction axiale d'un plan méridional d'une bille (86) du clapet anti-retour (82), d'une distance qui correspond à au moins 30 % du rayon de la bille (86).

5. Pompe à piston selon la revendication 3,
**caractérisée en ce que**
l'embouchure du canal de passage (90) tournée vers le clapet anti-retour (82) présente un rapport hauteur/largeur compris entre 0,2-0,3.

6. Pompe à piston selon la revendication 3,
**caractérisée en ce que**
l'embouchure du canal de passage (90) tournée vers le clapet anti-retour (82) a une largeur qui représente au plus 0,65 fois le diamètre de la bille (86) du clapet anti-retour (82).

7. Pompe à piston selon la revendication 1,
**caractérisée en ce que**
la chemise (26) est une pièce mise en forme en particulier une pièce formée à froid et notamment une pièce forgée à froid.

8. Pompe à piston selon la revendication 1,
**caractérisée en ce que**
la pièce d'obturation (68) est une pièce formée notamment une pièce formée à froid et en particulier une pièce forgée à froid.
